# EUROPEAN PATENT APPLICATION

(11) **EP 4 667 520 A1**
(43) Date of publication of application: **24.12.2025**
(21) Application number: 24182954.8
(22) Date of filing: 18.06.2024
(51) Int. Cl.: C08K 3/22, C08K 3/38, C08L 75/04, C08L 101/00, H01M 10/653, H01M 10/613, H01M 10/625, C08K 7/22, C08J 9/32

(54) **THERMALLY CONDUCTIVE COMPOSITIONS WITH REDUCED DENSITY**

(71) Applicant: Sika Technology AG, 6340 Baar (CH)
(72) Inventor: GUENE, Lia, 95690 Hedouville (FR); MERNAKA, Jana Beata, 8610 Uster (CH)
(74) Representative: Sika Patent Attorneys

(57) **Abstract**

The invention relates to a thermally conductive composition comprising a curable polymeric matrix and a filler composition consisting of at least one thermally conductive filler and at least one type of hollow microspheres.

The thermally conductive composition can be formulated to show excellent thermal conductivity while significantly reducing the density of the material.

## Description

### Technical Field

The invention relates to thermally conductive compositions and their use in battery-powered vehicles.

### Prior Art

The shift from fossil fuel energy sources to renewable and sustainable alternatives leads to the electrification of many areas, especially mobility. This results in an increasing use of electric equipment, especially battery cells and modules. Since battery cells and modules generate significant amounts of heat while operating, there is a need to dissipate the occurring heat efficiently to prevent detrimental heat accumulation in the battery and other electronic parts.

The manufacturing of such equipment requires suitable adhesives, sealants, gap-fillers and thermal interface materials (TIM) that cover, seal, bond and connect the batteries with the cooling unit. Apart from appropriate mechanical properties, a particular requirement for these materials is thus a high thermal conductivity. While thermally conductive, the material also needs to be electrically insulating to prevent dangerous short circuiting. Suitable materials typically consist of polymeric matrices and thermally conductive fillers.

A simple way to achieve higher thermal conductivity in the material is to increase the amount of thermally conductive filler. Commonly used thermally conductive fillers are dense and heavy particles, because the generally closer packing of particles allows for more heat transfer. Thus, the increase in such filler loadings causes the density of the material to increase in parallel. Correspondingly, the total weight of the material increases as well. It is well known that in mobility, as a matter of kinematics physics, the more mass there is to be moved, the more energy in form of work is consumed. Thus, a reduction in weight of the vehicle translates to a more energy efficient mode of transport. This is especially true in electric mobility, where the ultraheavy battery directly leads to a need for the other materials to be more lightweight. However, a reduction in density commonly involves a reduction of thermal conductivity properties, which is undesirable in this field.

Thus, there is a need to develop adhesives, sealants, gap-fillers and thermal interface materials (TIM) that have a lower density and therefore a lower weight, without compromising their performance characteristics, especially in terms of thermal conductivity.

The current state of the art offers no thermally conductive composition with sufficiently high thermal conductivity and at the same time a low overall density.

### Summary of the Invention

It is therefore an object of the present invention to provide a material composition that has high thermal conductivity and reduced density.

Surprisingly, the object could be achieved by the thermally conductive composition with the features of independent claim 1. The composition comprises a curable polymeric matrix and a filler composition consisting of at least one thermally conductive filler and at least one type of hollow microsphere.

This finding is surprising, because air- or gas-filled, hollow particles are generally considered thermally insulating. The inventive composition achieves significantly higher thermal conductivities than comparable compositions of the same density that do not contain such hollow microspheres. Similarly, the inventive composition achieves similar thermal conductivities to known thermally conductive compositions of the state of the art, while at the same time exhibiting a significantly lower density compared to those reference materials.

Since the microspheres are mostly hollow, lower density compositions can be formulated. Adding a defined amount of hollow microspheres to a defined thermally conductive composition thus allows for a similar thermal conductivity while significantly reducing the density of the material.

Such thermally conductive compositions according to the present invention are especially suitable for use in battery powered vehicles.

Further aspects of the invention are the subject of further independent claims. Particularly preferred embodiments of the invention are the subject of the dependent claims.

### Ways of executing the invention

In a first aspect, the invention relates to a thermally conductive composition comprising
- a curable polymeric matrix **P;**
- a filler composition **FC** consisting of
   i) at least one thermally conductive filler **F;**
   ii) at least one type of hollow microsphere **M;**
wherein the filler composition **FC** constitutes between 60 and 95% by weight based on the total weight of the composition.

The term "radical" is used in this document in a formal sense, meaning a molecular rest bound to an atom by a covalent bond, while the bond is formally "cut" to describe the molecular rest attached to it.

Substance names beginning with "poly", such as polyol or polyisocyanate, refer to substances containing, in a formal sense, two or more of the functional groups that occur in their name per molecule.

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-silane-functional polymers are polymers in which the Si atom of the silane group is linked to the polymer via a 1,3-propylene bridge.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

The term "polyacrylate" or "poly(meth-)acrylate" refers to polymeric compounds which have been prepared from acrylate or methacrylate monomers respectively. These (meth)-acrylate monomers refer to the esters of acrylic acid or methacrylic acid respectively. The polymerization commonly occurs by radical polymerization of the vinyl group.

The term "epoxy" or "epoxy resins" or "epoxy polymers" refers to polymeric compound which have been prepared from (pre)polymers containing epoxide groups and an adequate co-reactant, the so-called hardener. The hardener can be selected from amines, anhydrides, phenols, thiols and other suitable chemicals known to the person skilled in the arts.

"Molecular weight" is understood in the present document to mean the molar mass (in grams per mole) of a molecule or a molecule residue. "Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

The term "thermal conductivity" refers to the ability of a material to conduct heat. A material with a high thermal conductivity can transfer heat rapidly. On the other hand, materials with low thermal conductivity prevent heat transfer and are also called thermal insulators. In order to be considered a thermal insulator, a material should have a thermal conductivity value of less than 0.1 W/(m K), as measured according to ISO 8301:1991.

In the present document, "thermally conductive" is meant to refer to materials and compositions that have a thermal conductivity above 0.1 W/(m K), as measured according to ISO 8301:1991. Furthermore, "high thermal conductivity" refers to materials and compositions that have a thermal conductivity above 0.8 W/(m K), as measured according to ISO 8301:1991.

Particle size distribution D₅₀, also known as the median diameter or the medium value of the particle size distribution, is the value of the particle diameter at 50% in the cumulative distribution. Particle size distribution D₅₀ of a group of particles can be determined using light scattering methods or laser diffraction methods following. Preferably laser diffraction according to ISO 13320 is used, with water as the suspending medium.

The term "density" refers to a materials mass per unit of volume. A material with a high density has more mass per volume and is thus heavier. Correspondingly, a material with a lower density has less mass per volume and is thus lighter. In the present document, a "high density" is understood to mean a density above 0.5 g/mL measured according to ISO 1183-1.

In the present document "hollow" refers to the absence of any solid or liquid in an encapsulated space. Thus, hollow objects can contain gaseous components such as ambient air or any gas in general.

All industrial standards and norms cited in this document refer to the respective edition in force on the time of filing of the first application of this invention, if not otherwise defined.

The curable polymeric matrix **P** may be formed by any suitable polymeric matrix. Preferred compositions include elastomeric polymers. Preferably, the polymeric matrix **P** is selected from polyurethanes, silane-terminated polymers, poly(meth-)acrylates, epoxy resins, silicones, and mixtures of these materials.

The curably polymeric matrix **P** can be formulated as a one-component or a two-component system.

In preferred embodiments, the curable polymeric matrix **P** is a two-component composition consisting of a component **A** and a component **B,** wherein the reactive components are stored separately in each component.

In a preferred case, the polymeric matrix **P** comprises polyurethanes, wherein the component **A** commonly comprises or consists of isocyanates, especially diisocyanates. The component **B** commonly comprises or consists of alcohols, preferably polyols, especially diols and triols.

In a preferred case, the polymeric matrix **P** comprises silane-terminated polymers, wherein the component **A** commonly comprises or consists of organosilanes. The component **B** commonly comprises or consists of water.

In a preferred case, the polymeric matrix **P** comprises (meth)acrylate polymers, wherein the component **A** commonly comprises or consists of the (meth)acrylate monomer. The component **B** commonly comprises or consists of the radical starter.

In a preferred case, the polymeric matrix **P** are epoxy resins, wherein the component **A** commonly comprises or consists of epoxy functional prepolymers. The component **B** commonly comprises or consists of amines, especially di- and triamines., anhydrides, phenols and/or thiols.

The proportion of the polymeric matrix **P** in the composition may vary within wide ranges. Preferably, the polymeric matrix **P** is present in the composition in a proportion ranging from 5 to 60%, more preferably 10 to 50%, most preferably 10 to 30% by weight based on the total weight of the composition.

The filler composition **FC** consists of a thermally conductive filler **F** and hollow microspheres **M.** Preferably, the mass ratio of thermally conductive Filler **F** to hollow microspheres **M** ranges from 500:1 to 10:1, more preferably 400:1 to 50:1, most preferably 350:1 to 100:1.

The particle sizes of the filler composition **FC** may be monodisperse or polydisperse. The filler composition FC may have a monomodal, bimodal or multimodal particle size distribution. In a preferred embodiment, the filler composition **FC** has a bimodal or multimodal particle size distribution.

The filler composition **FC** constitutes between 60 and 95% by weight based on the total weight of the composition. Preferably, the filler composition **FC** is present in the composition in a proportion ranging from 65 to 90%, more preferably 70 to 85% by weight based on the total weight of the composition.

The thermally conductive filler **F** used herein may be formed of any suitable material, which include, aluminium hydroxide Al(OH)₃, aluminium oxide Al₂O₃, boron nitride BN, aluminium Al, magnesium hydroxide Mg(OH)₂, magnesium oxide MgO, silicon dioxide SiO₂, zinc oxide ZnO, titanium oxide TiO₂.

In a preferred embodiment, the thermally conductive filler **F** comprises or consists of Al(OH)₃ and/or Al₂O₃ and/or BN.

Preferably, the thermally conductive filler **F** comprises a mixture of Al(OH)₃ and BN in a weight ratio Al(OH)₃ to BN ranging from 20:1 to 1:1, preferably from 15:1 to 5:1, most preferably from 12:1 to 6:1.

In another preferred embodiment, the thermally conductive filler **F** has a median particle size distribution D₅₀ ranging from 0.1 to 150 µm, preferably from 1 to 120 µm, most preferably 2 to 100 µm, measured by laser diffraction according to ISO 13320.

Preferably, the thermally conductive filler **F** comprises or consists of spherical or spherically shaped particles. The term "spherically shaped" or "spherical" is used herein to refer to an isometric shape, i.e., a shape, in which the extension (particle size) is approximately the same in any direction. Particle shape can be assessed by inspection under a scanning electron microscope. Spherical particles are those that appear spherical under a scanning electron microscope at 400- to 5500-fold magnification, preferably at 5000-fold magnification. Preferably the particles also have an aspect ratio of 1 to 1.2, preferably 1 to 1.1. Particle shapes are often defined by aspect ratios, which is expressed by particle major diameter/particle thickness. In some embodiments, the aspect ratio of the fillers ranges from about 1 to 3, or from about 1 to 2, more preferably 1 to 1.2.

Preferably, the amount of thermally conductive filler **F** ranges between 60 and 94.9%, more preferably by 65 to 85% by weight based on the total weight of the composition.

In a preferred embodiment, the hollow microspheres **M** consist of a thermoplastic polymer shell encapsulating a gas. The gas can be any gas commonly used for hollow microspheres. Preferably, the gas is a blowing agent, for example a saturated hydrocarbon.

In another preferred embodiment, the hollow microspheres **M** have a median particle size distribution D₅₀ ranging from 20 to 80 µm, preferably from 30 to 60 µm, measured by laser diffraction according to ISO 13320.

In yet another preferred embodiment, the hollow microspheres **M** have a particle density of 20 to 40 kg/m³, more preferably 25 to 35 kg/m³, measured according to ISO 1183-1.

Preferably, the amount of hollow microspheres **M** ranges between 0.1 and 10%, more preferably by 0.1 to 5% by weight based on the total weight of the composition.

In a preferred embodiment, the thermally conductive composition has a thermal conductivity that ranges from 0.8 to 2.4 W/(m·K), preferably from 1.0 to 2.0 W/(m K) measured according to ISO 8301:1991.

In another preferred embodiment, the thermally conductive composition has a density that ranges from 1200 to 1600 kg/m³, preferably from 1400 to 1600 kg/m³, most preferably from 1500 to 1550 kg/m³, measured according to ISO 1183-1.

Another aspect of the invention relates to an article comprising the thermally conductive composition. This article is preferably a battery module consisting of one or more battery cells and a cooling unit, in particular wherein the battery module is connected to the cooling unit via a thermally conductive composition.

### Examples

Adduced hereinafter are working examples which are intended to elucidate the invention described in detail. It will be appreciated that the invention is not restricted to these described working examples.

The term "standard climatic conditions" refers to a temperature of 23±1 °C and a relative air humidity of 50±5%.

### Test methods for exemplary composition

The **viscosity** was determined on a rotational viscosimeter (Byko visc Rt Lite R model from BYK Instruments) according to ISO 2555 with the following measurement parameters: rotation 10 rpm, spindle 6, temperature 23°C.

The **thermal conductivity** was determined according to ISO 8301:1991 on samples cured for 16 hours at 80°C. For the measurements, a heat flux testing device (FOX 50 from TA instruments) was used with the following sample dimensions: diameter 54 mm, thicknesses 6 mm and 20 mm. The thermal plates were set to 20°C and 30°C for a measurement at 25°C.

The **Shore A** hardness was determined to DIN 53505 on test specimens cured for 16 hours at 80°C and stabilized at 23°C.

The **density** was determined according to ISO 1183-1 with products stabilized at 23°C.

### Compositions and material tests

A series of exemplary compositions **E2** and **E3** according to the invention and a series of comparative examples **E1** (ref.) and **E4** (ref.), **E5** (ref.) and **E6** (ref.) were prepared by mixing the ingredients of component **A** shown in tables 1 with their relative quantities as shown in tables 2 to 5 in a mixer until homogeneous pastes were obtained. For testing of the cured composition, the component **B** was added so that the volume ratio of **A:B** was 100:7 for **E1** (ref.), **E2, E3, E5** (ref.); **100:10 for E4** (ref.) and **100:14 for E6** (ref.).

### Compounds used in compositions

**Table 1: Compounds used for the example compositions.**

| **Name** | | **Description** | **Trade name** |
|---|---|---|---|
| **Component A** | | | |
| Polymer matrix component **A** | | Polyether polyol | Desmophen 22HS51 |
| Filler composition **FC** | **F-1** | Aluminium hydroxide | Portaflame SG200 |
| | **F-2** | Boron nitride | CFA 250s |
| | **M** | Hollow thermoplastic microspheres | Expancel 920 DE 40 d30 |
| Catalyst | | 1,4-diazabicyclo[2-2-2]octane | DABCO^{®} 33LV |
| Plasticizer | | Ditridecyl phthalate (DTDP) | Jayflex |
| Drying agent | | Molecular sieve | Siliporite 1720 |

| **Component B** | | | |
|---|---|---|---|
| Polymer matrix component **B** | | Diphenylmethane-4,4'-diisocyanate (MDI) | Desmodul^{®} 44 V 10 L |

### Compositions used in preliminary material tests

The preliminary material tests of the exemplary compositions are shown in table 2. Comparisons of exemplary compositions to comparative compositions with fixed thermal conductivity and with fixed density are displayed in tables 3 to 4 and table 5 respectively.

**Table 2: Component A used for material tests. Values are in wt.-% totaling 100%.**

| **Component A** | **E1 (ref.)** | **E2** | **E3** |
|---|---|---|---|
| Polymer matrix component **A** | 19 | 19 | 19 |
| **F-1** | 75 | 74.5 | 68.5 |
| **F-2** | - | - | 6 |
| **M** | - | 0.5 | 0.5 |
| Catalyst | 0.05 | 0.05 | 0.05 |
| Plasticizer | 2.95 | 2.95 | 2.95 |
| Drying agent | 3 | 3 | 3 |
| Thermal conductivity (W/(m·K)) | 1.23 | 0.89 | 1.06 |
| Viscosity (mPa·s) | 40'000 | 21'550 | 69'800 |
| Shore A Hardness | 96 | 94 | 92 |
| Density (g/mL) | 1.78 | 1.52 | 1.51 |

### Compositions with fixed thermal conductivity

Inventive composition **E2** achieves a reduction of the mix density by 9% compared to **E4** (ref.) when the thermal conductivity is set at 0.89 W/(m K).

**Table 3: Component A used for material tests. Values are in wt.-% totaling 100%.**

| **Component A** | **E2** | **E4** (ref.) |
|---|---|---|
| Polymer matrix component **A** | 19 | 26 |
| **F-1** | 74.5 | 68 |
| **F-2** | - | - |
| **M** | 0.5 | - |
| Catalyst | 0.05 | 0.05 |
| Plasticizer | 2.95 | 2.95 |
| Drying agent | 3 | 3 |
| Thermal conductivity (W/(m·K)). | **0.89** | **0.89** |
| Density (g/mL) | 1.52 | 1.65 |

### Compositions with fixed thermal conductivity II

Inventive composition **E3** achieves a reduction of the mix density by 13% compared to **E5** (ref.) when the thermal conductivity is set at 1.06 W/(m K).

**Table 4: Component A used for material tests. Values are in wt.-% totaling 100%.**

| **Component A** | **E3** | **E5** (ref.) |
|---|---|---|
| Polymer matrix component **A** | 19 | 22 |
| **F-1** | 68.5 | 72 |
| **F-2** | 6 | - |
| **M** | 0.5 | - |
| Catalyst | 0.05 | 0.05 |
| Plasticizer | 2.95 | 2.95 |
| Drying agent | 3 | 3 |
| Thermal conductivity (W/(m·K)). | **1.06** | **1.06** |
| Density (g/mL) | 1.51 | 1.74 |

### Compositions with fixed density

Inventive composition **E2** achieves an improvement of the thermal conductivity of 39% compared to **E6** (ref) when the density is set at 1.51 g/mL.

**Table 5: Component A used for material tests. Values are in wt.-% totaling 100%.**

| **Component A** | **E3** | **E6** (ref.) |
|---|---|---|
| Polymer matrix component **A** | 19 | 36 |
| **F-1** | 68.5 | 58 |
| **F-2** | 6 | - |
| **M** | 0.5 | - |
| Catalyst | 0.05 | 0.05 |
| Plasticizer | 2.95 | 2.95 |
| Drying agent | 3 | 3 |
| Thermal conductivity (W/(m·K)) | 1.06 | 0.65 |
| Density (g/mL) | **1.51** | **1.51** |

## Claims

1. A thermally conductive composition comprising
- a curable polymeric matrix **P;**
- a filler composition **FC** consisting of
i) at least one thermally conductive filler **F;**
ii) at least one type of hollow microspheres **M;**
wherein the filler composition **FC** constitutes between 60 and 95% by weight based on the total weight of the composition.

2. The thermally conductive composition according to claim 1, wherein thermally conductive filler **F** comprises or consists of Al(OH)₃ and/or Al₂O₃ and/or boron nitride BN.

3. The thermally conductive composition according to claims 1 to 2, wherein the thermally conductive filler **F** comprises a mixture of Al(OH)₃ and BN in a weight ratio Al(OH)₃ to BN ranging from 20:1 to 1:1, preferably from 15:1 to 5:1, most preferably from 12:1 to 6:1.

4. The thermally conductive composition according to claims 1 to 3, wherein the thermally conductive filler **F** has a median particle size distribution D₅₀ ranging from 0.1 to 150 µm, preferably from 1 to 120 µm, most preferably 2 to 100 µm, measured by laser diffraction according to ISO 13320.

5. The thermally conductive composition according to claims 1 to 4, wherein the filler composition **FC** has a multimodal particle size distribution.

6. The thermally conductive composition according to claims 1 to 5, wherein the hollow microspheres **M** consist of a thermoplastic polymer shell encapsulating a gas.

7. The thermally conductive composition according to claims 1 to 6, wherein the hollow microspheres **M** have a median particle size distribution D₅₀ ranging from 20 to 80 µm, preferably from 30 to 60 µm, measured by laser diffraction according to ISO 13320.

8. The thermally conductive composition according to claims 1 to 7, wherein the hollow microspheres **M** have a particle density of 20 to 40 kg/m³, preferably 25 to 35 kg/m³, measured by ISO 1183-1.

9. The thermally conductive composition according to claims 1 to 8, wherein the curable polymeric matrix **P** is selected from polyurethanes, silane-terminated polymers, poly(meth-)acrylates, epoxy resins, silicones, and mixtures of these materials.

10. The thermally conductive composition according to claims 1 to 9, wherein the curable polymeric matrix **P** is a two-component composition consisting of a component **A** and a component **B,** wherein the reactive components are stored separately in each component.

11. The thermally conductive composition according to claims 1 to 10,
wherein the filler composition **FC** constitutes between 60 and 95%, preferably between 65 and 90%, most preferably between 70 and 85% by weight based on the total weight of composition.

12. The thermally conductive composition according to claims 1 to 11,
wherein the mass ratio of thermally conductive filler **F** to hollow microspheres **M** ranges from 500:1 to 10:1, preferably 400:1 to 50:1, most preferably 300:1 to 100:1.

13. The thermally conductive composition according to claims 1 to 12,
wherein the thermal conductivity of the composition ranges from 0.8 to 2.4 W/(m·K), preferably from 1.0 to 2.0 W/(m·K) measured by ISO 8301:1991.

14. The thermally conductive composition according to claims 1 to 13,
wherein the density of the composition ranges from 1.2 to 1.6 g/mL, preferably from 1.4 to 1.6 g/mL, most preferably from 1.5 to 1.55 g/mL, measured according to ISO 11831-1.

15. An article comprising the thermally conductive composition according to claims 1 to 14, preferably a battery module consisting of one or more battery cells and a cooling unit, in particular a battery module that is connected to the cooling unit via a thermally conductive composition.
